# EUROPEAN PATENT APPLICATION

(11) **EP 1 180 531 A1**
(43) Date of publication of application: **20.02.2002**
(21) Application number: 00202826.4
(22) Date of filing: 11.08.2000
(51) Int. Cl.: C08G 18/70, C09D 175/04

(54) **Composition for coating wood and process and apparatus for the same**

(71) Applicant: SIGMA COATINGS B.V., 1422 AD Uithoorn (NL)
(72) Inventor: Nienhuis, Jan Geerhard, 2312 VK Leiden (NL); Akkerman, Matthias Anthonie, 3602 PH Maarssen (NL); Pathak, Umesh Kumar Dinanath, 1065 HN Amsterdam (NL); Adriaans, Marcel Johannes, 1506 XS Zaandam (NL)
(74) Representative: Leyder, Francis

(57) **Abstract**

The water-based coating compositions for wood essentially contain as binder a binder that has side groups capable of linking with isocyanate, and further contains a polyisocyanate (preferably a diisocyanate) in an amount of 1 to 100 g/L The coating has improved wet adhesion on the substrate.

Also described are processes for coating wood characterised by the use of the compositions of the invention, and apparatuses for carrying out the processes.

## Description

The present invention relates to a water-based coating composition, more particularly for coating wood. It also relates to a process for coating wood, and further to an apparatus for coating wood.

An important problem in the coating of wood is the adhesion, particularly the wet adhesion, to the substrate. Wet adhesion as used herein is the adhesion under wet conditions, e.g. when the wood is submitted to humid or watery conditions.

Wood is a natural substrate, which tends to contract as a function of humidity more than other substrates, hence making adhesion of the coating to the substrate a greater problem for wood. Partial water vapour pressure and moisture transport across the wood play a great role when both sides of the wood are not exposed to the same conditions.

In joinery, the wooden substrate is mostly coated industrially.

It takes a certain time (hereinafter the drying time) for the coating to acquire its optimal properties through physical and chemical drying, particularly in cold conditions when it can be from several weeks to several months. The period of time between the coating of joinery such as window frames and doors and its placement in buildings is often shorter than the drying time. During the drying time, the coating is very vulnerable. In particular, the performance of the present coating compositions is insufficient.

It is known that there is often, particularly during wintertime, a difference in humidity between the inside and the outside of buildings, coupled with a temperature difference that creates a temperature gradient across the frames and doors. When the adhesion to the wood substrate is insufficient, this often further contributes to causing delamination of the coating, initially forming blisters followed by flaking of the coating.

Another problem to take into consideration is that the use of volatile organic compounds, which comprise solvents, is more and more undesirable, particularly for industrial uses.

There is thus a need in the art for water-based coating compositions for wood that would provide an excellent adhesion to the substrate.

There is also a need to improve the resistance of the coatings to mechanical damage, such as can be caused by hail. It is desirable that when coatings have been damaged, the damage remains local; this can be achieved if the undamaged parts of the coatings, and particularly the neighbourhood of the damaged parts, prevent water ingress.

Accordingly, it is an object of the invention to provide water-based coating compositions for wood, which provide a great adhesion to the substrate, particularly under wet conditions.

Another object of the invention is to provide water-based coating compositions for wood, which provide an improved wet adhesion to the substrate compared to the present commercial compositions.

A further object is to provide coatings having a good resistance to mechanical damage.

This and other objects are obtained with the compositions of the invention which essentially consist of a water-based coating composition for wood, wherein the binder has groups capable of linking with isocyanate, to which has been added a polyisocyanate in an amount of 1 to 100 g/L

The wet adhesion of paint on wood obviously depends on the nature of the wood itself (e.g. on the wood resins, the hardness of the wood and the resistance of its lignin to degradation by UV light). Using the invention will however provide improved coating properties on any type of wood, as shown in the examples.

Whilst not wishing to be bound by a theory, it is believed that:
- the invention provides chemical cross-linking between wood and coating;
- the said cross-linking is relatively fast;
- there is thus a reduction in the drying time, which is the period of time when the coating is more vulnerable; and
- the resistance to mechanical damage is increased.

The compositions of the invention are thus based on water-based coating compositions that are not inventive per se. They contain as binder an organic resin, preferably in a amount of 20 to 650 g/L, more preferably of 50 to 350 g/L; compositions used as impregnation primers fall in the lower end of that range, while those used as opaque primers fall in the higher end. The resin must have groups capable of linking with isocyanate functions; the preferred groups are hydroxy functional groups (R-NCO + HO-R' -> R-NH-CO-O-R'). The resin is preferably selected from the group consisting of acrylic, alkyd, polyester and polyurethane resins and combinations thereof.

The paint formulation essentially contains no other component than the resin that can react with the isocyanate functions. Thus, when an alkaline material has to be added, the paint is preferably neutralised by one or more alkaline substances, more preferably amines selected from the group consisting of sterically hindered amines, non-reactive amines and mixtures thereof. For instance, for anionically stabilised acrylics, the pH should preferably be between 7.5 and 9.5. Also, when a solvent is used, there is preferably selected one or more less reactive solvents such as glycols, more preferably sterically hindered glycols.

The composition further contains a polyisocyanate, preferably a diisocyanate. It is used in an amount of 1 to 100 g/L, preferably of 5 to 30 g/L, more preferably of 15 to 25 g/L. Whilst not wishing to be bound by a theory, it is believed that higher amounts do not contribute to an increase of the wet adhesion of the coating. In particular, it is not necessary to provide enough isocyanate groups to react with all resin groups capable of linking with isocyanate functions. The minimum concentration is dependent on the performance level needed, and can readily be determined without undue burden.

The polyisocyanate must be a polyisocyanate adapted for use in emulsified two-component paints based on polyisocyanates. It should preferably have a sufficient stability in the composition, reflected by a loss of maximum 1%, preferably maximum 0.5%, of the isocyanate amount per hour in the operating conditions.

Despite the reaction between the polyisocyanate and the resin, it is possible to prepare relatively stable compositions when the resin and the polyisocyanate are actually emulsified separately. Nevertheless, the compositions are preferably prepared extemporaneously, by adding (as in any other two-component paint) the required amount of polyisocyanate to the other part of the composition, hereinafter the first component. Also, it is possible to observe a slight increase in viscosity over time, which can if needed be compensated by the addition of water.

The cross-linking properties of polyisocyanate with a resin having functional groups capable of linking with isocyanate functions are well known in the art and need not be described here. It is known that the free isocyanate functions are capable of reacting with the wooden substrate. Whilst not wishing to be bound by a theory, it is believed that the compositions of the invention provide some cross-linking with the resin and improve the adhesion of the coating to the substrate. It was in addition surprisingly found that, despite the fact that the polyisocyanate is not totally stable in the compositions of the invention, it is possible to coat wood on an industrial scale using said compositions. According to a preferred embodiment, the process of the invention can be operated continuously (or near-continuously) by adding fresh polyisocyanate as required to maintain the original concentration of free isocyanate functional groups.

In the wood coating industry, primers are generally applied by dipping, spraying, vacuum impregnating or flow coating the substrate, the latter being preferred. In the industrial process, the excess paint is collected and directly recycled.

To ensure constant end-performance of the coated wood with industrial application methods, the addition of new paint and fresh polyisocyanate should be controlled, preferably automatically. The amount of paint used lies typically between 10 and 30 L/h. It is compensated by the addition of the same amount of fresh paint (according to the invention), or preferably by the simultaneous addition of the required amounts of the two components to make said amount of fresh paint.

To define the amount of fresh polyisocyanate to be added during the application process, the amount of paint used has to be known. Therefore, the consumption of paint from the storage tank is monitored. The remaining concentration of polyisocyanate is determined, either by direct measurement or from calculations based on previous measurements. The decrease of the concentration of free isocyanate functional groups can be determined e.g. using near-infrared spectrometry or Fourier Transformed Infrared Spectrometry; typically, the decrease is comprised between 0.3 and 1 % of the amount of polyisocyanate per minute. It is thus possible to calculate the amount of fresh polyisocyanate to be added in the storage tank.

The viscosity and the pH should also be monitored and corrected when necessary.

In an automatic process, as typically used in the industrial coating of wood, a software unit controls the whole process and is capable of storing and/or printing data.

In a flow coater, the objects to be coated are moved through the unit, between nozzles that let the paint flow over said objects. Typical paint viscosities for flow coaters should be in the range of 18-22 s (DIN 3 cup according to the ISO 2431 standard method) for a transparent impregnation primer and 16-20 s (DIN 4 cup, ISO 2431) for an opaque primer.

The invention will now be further described by reference to the Figures in which:
Fig. 1 represents a diagram of a flow coater incorporating an embodiment of the invention; and
Fig. 2 represents a diagram of a dipping unit incorporating an embodiment of the invention.

The apparatus of the invention for coating wood comprises:
- an application unit, selected from the group consisting of a flow coating unit (6), a dipping unit (1), a spraying unit and a vacuum impregnation unit;
- a paint tank (1);
- a line (10) through which the paint (2) is pumped from the tank (1) by a pump (11) and returns to the tank (1);
- measurement units for one or more properties selected from the group consisting of the paint level (21), the concentration of free isocyanate functional groups (22), the pH (23) and the viscosity (24);
- a control unit (25);
- delivery systems for one or more of the products selected from the group consisting of the first component (31), a polyisocyanate (32), an alkaline substance (33) and water (34).

The apparatus of the invention is particularly adapted for use with the water-based coating compositions of the invention.

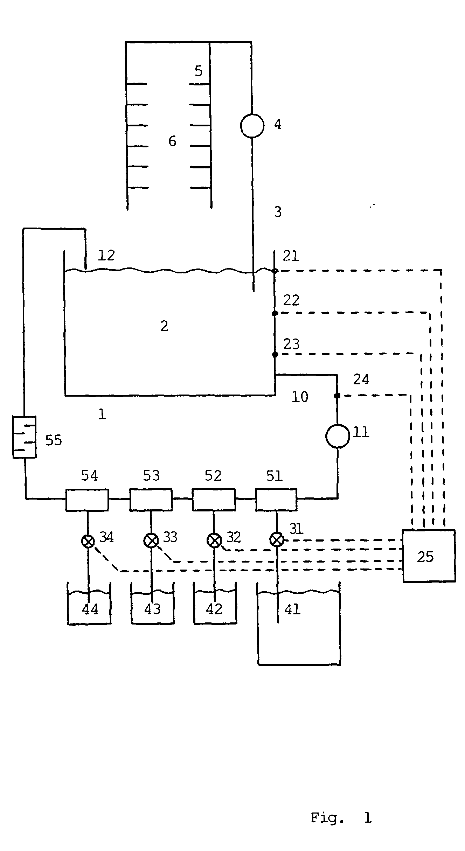

In Fig. 1, there is shown a paint tank (1) containing paint (2) which is pumped through a line (3) by a pump (4); the paint flows through nozzles (5) in the flow coating unit (6) wherein the wood parts are flow coated. This represents a typical flow coater as known in the art.

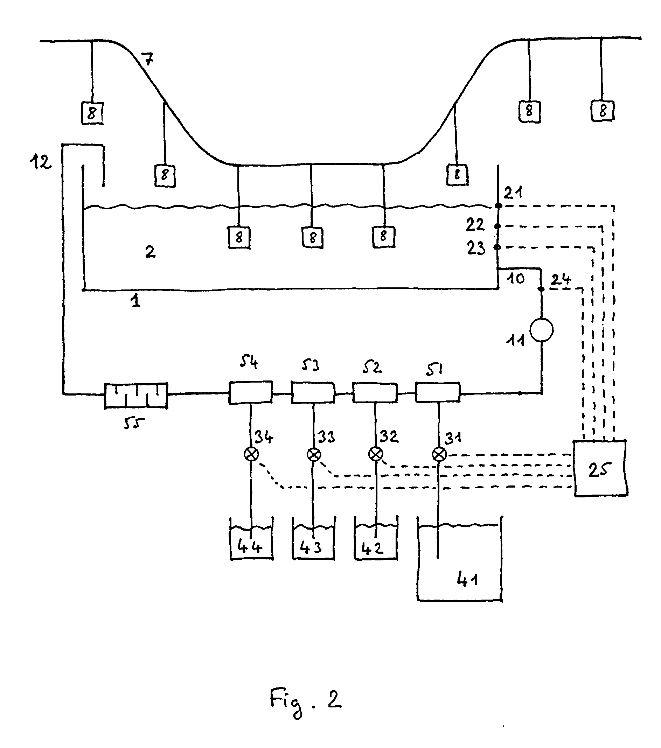

Fig. 2 shows a tank (1), also serving as dipping unit, containing paint (2) in which objects (8) carried by a transportation unit (7) are dipped. This represents a typical dipping unit as known in the art.

According to the embodiment represented in Figures 1 and 2, the paint tank (1) is provided with a further line (10) through which the paint (2) is pumped by a pump (11) and returns to the tank at (12).

The tank (1) is provided with measurement units for the paint level (21), the concentration of free isocyanate functional groups (22) and the pH (23); a viscosity measurement unit (24) is provided on line (10). All measurement units (21) to (24) are connected to a control unit (25).

The control unit (25) controls delivery pumps (31) to (34) which deliver respectively the first component from tank (41), polyisocyanate from tank (42), the alkaline substance from tank (43) and water from tank (44) respectively into mixing blocks (51) to (54) wherein they mix with the paint circulating in line (10). A further static mixing unit (55) is provided downstream on line (10).

Figures 1 and 2 only represent one embodiment of the invention. Numerous variations are readily available to the person of ordinary skill in the art, such as for example:
- the measurement units (22) and (23) can be located along line (10) while measurement unit (24) can be in the tank (1);
- the measurement unit (22) for the concentration of free isocyanate functional groups can be omitted if the amount of fresh polyisocyanate to be added is calculated by the control unit (25) on the basis of previous measurements;
- the delivery system [(23), (33), (43), (53)] for an alkaline substance may be omitted altogether when the composition does not require the addition of an alkaline substance;
- the lines from the delivery pumps (31) to (34) can lead into only one mixing block [replacing blocks (51) to (54)];
- the order of the various elements along line (10) can be changed, for example by placing the pump (11) and/or any measurement unit (22) to (24) after the mixing blocks (51) to (54).

### Examples 1 and 2: transparent impregnation primer.

The following formulation was made to prepare the first component:
- water 67 parts by weight (pbw)
- acrylic modified alkyd resin emulsion (lab product Bie 33/175 of Vianova Resins) 28 pbw (47 wt% solids)
- 2-dimethylamine 2-methylpropanol 1.3 pbw
- additives (fungicide, anti-foaming, bentonite) 3.4 pbw
- dryer 0.3 pbw
   TOTAL 100 pbw

The first component had a pH of about 9 and a viscosity of 19 s (DIN 3 cup according to ISO 2431).

The second component was an 80 wt % solution of a trimer of hexamethylene diisocyanate (244 g/eq NCO; the trimer is modified with a hydrophilic group that gives the trimer a diisocyanate functionality) in propylene glycol methyl ether acetate.

The two components were mixed in a ratio such as to obtain a diisocyanate concentration of 20 g/L in the impregnation primer.

The primer was used in a flow coater. The following parameters were monitored, and the following corrective actions taken:
- viscosity : when higher than 19 s (DIN 3 cup according to ISO 2431), addition of water;
- pH : when lower than 9, addition of 2-dimethylamine 2-methylpropanol;
- free isocyanate : when lower than the initial amount, addition of diisocyanate ;
- paint level in the storage tank: when lower than the initial value, addition of fresh primer.

Free isocyanate was monitored using Fourier-Transform infrared measurements at 2270 cm⁻¹. After 60 minutes at 20°C, the concentration of free isocyanate functional groups was of 16 g/L (i.e. 80% of the initial concentration).

Panels of spruce (Example 1) and meranti (Example 2) were coated with the impregnation primer and were dried overnight at a temperature of 20°C and a relative humidity of 50%. A transparent topcoat with solid contents of 40% was applied with wet film thickness of 300 µm and dried at a temperature of 20°C and a relative humidity of 50%.

The following tests were performed; the results are summarized in Table 1.

### Cross Hatch Adhesion Test

In all tests I to VII below, adhesion was evaluated using a Cross Hatch Adhesion Test which is comparable to ISO 2409. A cross hatch was made through the coating to the wood substrate. Seven pulls with 3M Scotch™ adhesion tape were made, pulling the tape away at an angle of about 45 degrees to the surface. The scale 0 to 5 is 0% de-adhesion to 100% loss of adhesion.

### Wet adhesion after 4 days (I), 7 days (II) and 15 days (III)

The wet adhesion test is an important test to prove whether a paint film is suitable for joinery application or not. For joinery application a high outdoor performance, i.e. resistance against damages and high humidity is necessary. After damaging the paint film using cross hatches, the paint film still has to perform without loss of adhesion under wet circumstances.
Thus, cross hatches were made through the paint film and wet cotton wool was put on the cuts. After 1 hour (test I; after 4 days drying), 1.5 hour (test II; after 7 days drying) and 1.5 hours (test III; after 15 days drying) the pulls were made and the adhesion evaluated.

### Blister-box (IV)

To test the resistance of a high pressure of water vapour in an early stage after application of the paint, this test was performed. High humidity conditions are commonly found in new buildings and bathrooms. A fresh water-borne primer has not reached its optimal properties and cannot sustain the high water vapour pressure, resulting in blisters and/or the paint flaking off the wood.

Spruce panels according to example 1 were coated on one side and the uncoated side was placed above water having a temperature of 60°C. This results in a high vapour pressure which lasts for at least three days. Then the panels were placed into the freezer at -5°C for at least one day followed again by exposure above the 60°C water for at least three days. After two days recovery, the adhesion test was performed.

This test was not performed on meranti wood (example 2).

### Weather-o-meter and blister-box (V)

To obtain information about the properties of the paint system after aging, spruce panels were placed in the weather-o-meter for 2000 hours. After 2000 hours, all panels looked fine and no loss of adhesion was detected. Conditions in the weather-o-meter were according to ISO 4892. Then, the panels were placed on the blister-box and had the same cycle as the blister-box-test described above (test IV). After recovery of the panels the adhesion test was performed.

This test was not performed on meranti wood (example 2).

### Outdoor exposure (VI)

As described in ISO 2810, coated panels were placed outside for 2 years. The Cross Hatch Adhesion test was then performed.

### Double climate Room (VII)

In addition to the blister-box test, a double climate cabinet test was performed. Parts (namely the L-joints) of window frames coated as described above were exposed for six months in a double climate room. One side had a high humidity (80 to 90%, depending on the dew point) and high temperature (35°C) and the other side had a cold climate and a low humidity. The cold climate had every day a cycle of 3 hours defrosting, 1 hour at 5°C, 3 hours cooling and 17 hours at -10°C.

As a result of the changing of the climate on the cold side, of the temperature cycle and of the defrosting of the cooling elements (which releases water), the humidity varies on both sides. The L-joints were then stored in a standard climate of 23°C and 50% humidity for 2 days before the adhesion was tested.

| TABLE 1 | I | II | III | IV | V | VI | VII |
|---|---|---|---|---|---|---|---|
| Ex. 1 | 1 | 0 | 0 | 3 | 1 | 2 | 2 |
| Ex. 2 | 0 | 0 | 0 | n.a. | n.a. | 4 | 0 |
| Comp. Ex. A | 3 | 3 | 3 | 4 | 4 | 2.5 | 5 |
| Comp. Ex. B | 2.5 | 1 | 1 | n.a. | n.a. | 4 | 1 |
| n.a. = not applicable (not tested) | | | | | | | |

### Comparative examples A and B: transparent impregnation primer.

Examples 1 and 2 were repeated without adding any diisocyanate, respectively with spruce (comparative example A) and meranti (comparative example B). The adhesion test results are also in Table 1.

In test VI, no substantial differences were observed with panels of the same wood treated according to the invention (it is believed that this is because the results essentially depend on the topcoat, which is the same in the examples and the comparative examples).

### Examples 3 and 4: opaque primer.

The following formulation was made to prepare the first component:
- water 15.7 pbw
- alkyd resin emulsion (commercially available as Setal 6002 from Akzo Nobel Resins) 45 pbw (46 wt% solids)
- emulsion of acrylic modified alkyd solution (commercially available as Reshydrol AY 586 w from Vianova Resins) 9.0 pbw (38 wt% solids)
- pigments and fillers (TiO₂, kaolin, CaCO₃) 22.5 pbw
- additives (fungicide, anti-foaming) 7.0 pbw
- dryer 0.8 pbw TOTAL 100 pbw

The first component had a pH of about 8 and a viscosity of 17 s (DIN 4 cup according to ISO 2431).

The second component was an 80 wt% solution of a trimer of hexamethylene diisocyanate (244 gleq NCO; the trimer is modified with a hydrophilic group that gives the trimer a diisocyanate functionality) in propylene glycol methyl ether acetate.

The two components were mixed in a ratio such as to obtain a diisocyanate concentration of 20 g/L in the impregnation primer.

The primer was used in a dipping unit. The following parameters were monitored, and the following corrective actions taken:
- viscosity : when higher than 17 s (DIN 4 cup according to ISO 2431), addition of water;
- pH : when lower than 8, addition of 2-dimethylamine 2-methylpropanol;
- free isocyanate : when lower than the initial amount, addition of diisocyanate ;
- paint level in the storage tank: when lower than the initial value, addition of fresh primer.

Free isocyanate was monitored using Fourier-Transform infrared measurements at 2270 cm⁻¹. After 60 minutes at 20°C, the free isocyanate concentration was of 15.2 g/L (i.e. 76% of the initial concentration).

Panels of spruce (Example 3) and meranti (Example 4) were coated with the impregnation primer and were dried overnight at a temperature of 20° C and a relative humidity of 50%. An opaque topcoat with solid contents of 45% was then applied with a wet film thickness of 275 µm and dried at a temperature of 20° C and a relative humidity of 50%.

Tests as described in examples 1 and 2 were performed; the results are summarized in Table 2. Tests IV (Blister-box) and V (Weather-o-meter and blister-box) were not performed on meranti wood (example 4).

| TABLE 2 | I | II | III | IV | V | VI | VII |
|---|---|---|---|---|---|---|---|
| Ex. 3 | 0 | 0 | 0 | 4 | 1 | 1 | 0 |
| Ex. 4 | 0 | 0 | 0 | n.a. | n.a. | 1 | 0 |
| Comp. Ex. C | 4 | 4 | 3.5 | 5 | 1.5 | 1.5 | 0.5 |
| Comp. Ex. D | 1.5 | 1.5 | 1.5 | n.a. | n.a. | 1.5 | 0.5 |
| n.a. = not applicable (not tested) | | | | | | | |

### Comparative examples C and D: opaque primer.

Examples 3 and 4 were repeated without adding any diisocyanate, respectively with spruce (comparative example C) and meranti (comparative example D). The adhesion test results are also in Table 2.

### Example 5 and comparative example E:

The compositions respectively of example 1 and comparative example A was used in example 5 and comparative example E.

Panels of meranti were coated as follows with the compositions and were dried overnight at a temperature of 20° C and relative humidity of 50 %. Only the heart side of the panels was coated, one half according to example 5, the other half according to comparative example E.

According to example 5, panels were coated at each of the following moments in time:
- immediately after addition of the diisocyanate (t=0);
- 40, 100 and 160 min after addition of the diisocyanate (t=40, 100 and 160); and
- after one day (t=1440).
At t=1440, immediately after coating a panel, the pH was adjusted to 9 with 2-dimethylamine 2-methylpropanol and fresh diisocyanate was added to compensate for the loss of free isocyanate functional groups. Thereafter, further panels were coated at each of the following moments in time:
- immediately after adjusting the pH and adding fresh diisocyanate (t=1441);
- then at t=1480, 1530 and 1580.

In comparative example E, the composition contains no free isocyanate functional groups; it was applied on the other half of the heart side of each of the panels, immediately after coating the first half according to example 5.

On all panels, a transparent topcoat with solid contents of 40 % was then applied with wet film thickness of 300 µm and dried at a temperature of 20° C and a relative humidity of 50%

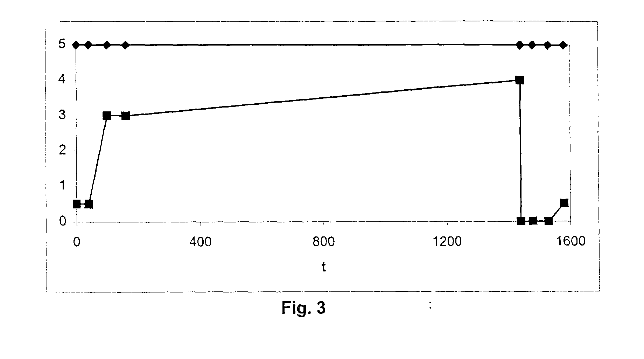

The wet adhesion was tested after 15 days, as described in example 1 (test III). For comparative example E, the result was a value of 5 (reflecting 100% loss of adhesion on a scale of 0 to 5). For example 5, the results were as shown in Table 3 (next page) and on Fig. 3.

**Table 3**

| t (min) | comp.ex. E | example 5 |
|---|---|---|
| 0 | 5 | 0.5 |
| 40 | 5 | 0.5 |
| 100 | 5 | 3 |
| 160 | 5 | 3 |
| 1440 | 5 | 4 |
| 1441 | 5 | 0 |
| 1480 | 5 | 0 |
| 1530 | 5 | 0 |
| 1580 | 5 | 0.5 |

The results demonstrate the influence of the amount of reactive isocyanate groups on the wet adhesion, and the ability to recover (and possibly improve) the initial wet adhesion by addition of fresh polyisocyanate. In other words, if the polyisocyanate has already reacted [e.g. with the binder], the best wet adhesion is no longer obtained, and the properties tend to be the same as when using a composition without reactive polyisocyanate.

I The results further demonstrate that, despite the fact that the polyisocyanate is not totally stable in the compositions of the invention, it is possible to coat wood on an industrial scale using said compositions in a continuous (or near continuous) process.

## Claims

1. Water-based coating compositions for wood, essentially containing as binder a binder that has groups capable of linking with isocyanate, **characterised in that** it further contains a polyisocyanate in an amount of 1 to 100 g/L

2. Composition according to claim 1, wherein the polyisocyanate is a diisocyanate.

3. Composition according to either of claims 1 or 2, wherein the groups are hydroxyl groups, the binder being preferably selected from the group consisting of acrylic, alkyd, polyester and polyurethane resins and combinations thereof.

4. Composition according to any one of claims 1 to 3 wherein the amount of polyisocyanate is of 5 to 30 g/L, preferably of 15 to 25 g/L, calculated on the composition.

5. Composition according to any one of claims 1 to 4, wherein the binder is present in an amount of 20 to 650 g/L, preferably of 50 to 350 g/L, calculated on the composition.

6. Composition according to any one of claims 1 to 5, wherein the polyisocyanate has a sufficient stability in the composition, reflected by a loss of maximum 1%, preferably maximum 0.5%, of the amount of free isocyanate groups per hour in the operating conditions.

7. Process for coating wood, comprising the steps of:
- applying on the wood a wet coating of a composition according to any one of claims 1 to 6;
- allowing said coating to dry; and
- recovering coated wood.

8. Use of a polyisocyanate in a water-based composition for coating wood according to any one of claims 1 to 6.

9. Use of a polyisocyanate in a process for coating wood comprising the step of applying on the wood a wet coating of a composition according to any one of claims 1 to 6.

10. Apparatus for coating wood, comprising:
- an application unit, selected from the group consisting of a flow coating unit (6), a dipping unit (1), a spraying unit and a vacuum impregnation unit;
- a paint tank (1);
- a line (10) through which the paint (2) is pumped from the tank (1) by a pump (11) and returns to the tank (1);
- measurement units for one or more properties selected from the group consisting of the paint level (21), the free isocyanate concentration (22), the pH (23) and the viscosity (24);
- a control unit (25);
- delivery systems for one or more of the products selected from the group consisting of the first component (31), a polyisocyanate (32), an alkaline component (33) and water (34).
